# NEUE EUROPÄISCHE PATENTSCHRIFT

(11) **EP 3 072 375 B2**
(45) Veröffentlichungstag und Bekanntmachung des Hinweises auf die Entscheidung über den Einspruch: **13.07.2022**
(45) Hinweis auf die Patenterteilung: 27.11.2019
(21) Anmeldenummer: 16161008.4
(22) Anmeldetag: 17.03.2016
(51) Int. Cl.: A01B 69/00, A01D 75/30

(54) **LANDWIRTSCHAFTLICHES ARBEITSGERÄT MIT EINER MENSCH-MASCHINE-SCHNITTSTELLE UND VERFAHREN ZUM BETREIBEN DESSELBEN**
MAN-MACHINE INTERFACE FOR AN AGRICULTURAL WORKING DEVICE, CONTROL SYSTEM, AGRICULTURAL WORKING DEVICE AND METHOD FOR OPERATING SAME
INTERFACE HOMME-MACHINE POUR UN ENGIN AGRICOLE, SYSTEME DE COMMANDE, ENGIN AGRICOLE ET PROCEDE DE FONCTIONNEMENT ASSOCIE

(30) Priorität: 27.03.2015 DE 102015104764
(43) Veröffentlichungstag der Anmeldung: 28.09.2016
(73) Patentinhaber: CLAAS Saulgau GmbH, 88348 Bad Saulgau (DE)
(72) Erfinder: Epp, Siegfried, 88436 Eberhardzell (DE); Scham, Raphael, 88356 Ostrach (DE)

(56) Entgegenhaltungen:
- EP-A1- 1 321 027
- EP-A1- 2 018 803
- EP-A2- 1 389 413
- EP-A2- 1 405 556
- DE-A1- 19 620 070
- DE-U1- 29 816 837
- GB-A- 2 484 282
- US-A- 6 032 441
- US-A1- 2006 191 250
- KRONE_EasyCut_10_11 Brochüre
- Krone Easy-B-1000-CV_CR-Operator-Manual 2014
- Elho arrow user manual
- PÖTTINGER NOVACAT V10 MANUAL
- KV_OM_5090MTBX:ISOBUS_A132088300 operating manual
- Seat Leon_EN_0514 owner's manual
- Seat Media Sytem owner's manual 0514
- Hardi 67002900 HC6500 SW1_001 Ver1_06 GB instruction book

## Beschreibung

Die Erfindung betrifft eine Mensch-Maschine-Schnittstelle für ein landwirtschaftliches Arbeitsgerät, ein landwirtschaftlichen Arbeitsgerät und ein Verfahren zum Betreiben des landwirtschaftlichen Arbeitsgeräts.

Im Betrieb von landwirtschaftlichen Arbeitsgeräten, wie zum Beispiel im Betrieb einer Kombination eines landwirtschaftlichen Zugfahrzeugs mit einem Frontmähwerk und mindestens einem Heckmähwerk, spielt der Einsatz der Automatisierungs- und Informationstechnik eine immer größere Bedeutung. Dabei tauschen die Baugruppen eines Arbeitsgeräts über einen Datenbus, der in der Landwirtschaft auch als ISO-Datenbus bezeichnet wird, untereinander Daten aus. Eine Mensch-Maschine-Schnittstelle dient der Anzeige und Eingabe von Daten für das landwirtschaftliche Arbeitsgerät.

Aus EP 2 018 803 A1 ist eine Mähwerkskombination, mit zumindest zwei Arbeitsaggregaten bekannt, die in Fahrtrichtung hintereinander angeordnet sind und zueinander spurversetzt benachbarte Fahrgassen überdecken, wobei zumindest eines der Arbeitsaggregate mittels eines Querantriebs quer zur Fahrtrichtung relativ zu dem oder den anderen Arbeitsaggregaten verstellbar ist, sowie mit einer elektronischen Steuervorrichtung zur Steuerung der von den Arbeitsaggregaten überstrichenen Fahrgassen.

Aus der Praxis bekannte Mensch-Maschine-Schnittstellen für landwirtschaftliche Arbeitsgeräte weisen ein Bedienterminal mit einem Bildschirm und mehreren Eingabetasten und vorzugsweise einen Joystick auf. Die Eingabetasten des Bedienterminals sind abhängig von einer zugehörigen Bildschirmanzeige des Bildschirms mit Funktionen belegt. Die Funktion von Eingabetasten ist nicht fest vorgeben, sondern wird durch Änderung des der Taste zugewiesenen Bildschirmbereiches dynamisch angepasst. Typischerweise sind die Eingabetasten abhängig vom zu steuernden oder zu regelnden Arbeitsgerät mit entsprechenden Funktionen steuerungsseitig fest vorbelegt. Derart steuerungsseitig mit Funktionen fest vorbelegte Eingabetasten werden auch als Softkey-Eingabetasten bezeichnet. Ferner ist es bekannt, dass sogenannte Auxiliary-Eingabetasten mit entsprechenden Funktionen frei belegt werden können. Die Belegung solcher Auxiliary-Eingabetasten mit Funktionen durch den Bediener erfolgt über das Bedienterminal.

Zum Betreiben eines ein Zugfahrzeug, ein Frontmähwerk und mindestens ein Heckmähwerk umfassenden landwirtschaftlichen Arbeitsgeräts ist es aus der Praxis bereits bekannt, über die Mensch-Maschine-Schnittstelle für das oder jedes Heckmähwerk eine Überlappung oder Überdeckung mit dem Frontmähwerk einzustellen, nämlich zwischen einem steuerungsseitig hinterlegten, einer maximal zulässigen Überdeckung entsprechenden ersten Grenzwert und einem ebenfalls steuerungsseitig hinterlegten, einer minimal zulässigen Überdeckung entsprechenden zweiten Grenzwert.

Die Einstellung einer entsprechenden Überdeckung zwischen dem jeweiligen Heckmähwerk und dem Frontmähwerk ist für den ordnungsgemäßen Betrieb des landwirtschaftlichen Arbeitsgeräts von Bedeutung und von der aktuellen Betriebssituation abhängig. Dann, wenn ein Arbeitsgerät mit einem Frontmähwerk und zwei Heckmähwerken in einer Ebene in Geradeausfahrt betrieben wird, kann für beide Heckmähwerke die minimal zulässige Überdeckung eingestellt werden. Dann hingegen, wenn beim Betrieb des Arbeitsgeräts in der Ebene eine Kurvenfahrt auszuführen ist, muss an demjenigen Heckmähwerk, das dem Radius der Kurve zugewandt ist, eine größere Überdeckung eingestellt werden, als an demjenigen Heckmähwerk, das von dem Radius der Kurve abgewandt ist.

Beim Mähbetrieb an einem Hang, d.h. einer Fahrt quer zu einer Hangneigung bzw. quer zu einer schrägen Fläche eines Feldes, bei welcher das Zugfahrzeug aufgrund der Hangabtriebskraft abdriftet und sich schräg zur Fahrtrichtung ausrichtet, verändern sich die tatsächlich wirkenden Überlappungen der Mähbereiche zwischen dem vorderen und dem bzw. den hinteren Mähwerken. Dementsprechend müssen beim Betrieb ein Frontmähwerk und zwei Heckmähwerke umfassenden Arbeitsgeräts an einem Hang für die Heckmähwerke unterschiedliche Überdeckungen eingestellt werden, insbesondere derart, dass für das in Hangrichtung gesehen obere Heckmähwerk eine kleinere Überdeckung bezogen auf das Frontmähwerk eingestellt wird als an dem in Hangrichtung gesehen, unteren Heckmähwerk des Arbeitsgeräts.

Bislang können solche Überdeckungen zwischen dem Frontmähwerk und dem oder jedem Heckmähwerk nicht komfortabel eingestellt werden. Es besteht daher Bedarf an einer Mensch-Maschine-Schnittstelle, einem Steuerungssystem mit einer solchen Schnittstelle, einem landwirtschaftlichen Arbeitsgerät mit einem solchen Steuerungssystem und an einem Verfahren zum Betreiben eines landwirtschaftlichen Arbeitsgeräts, mit Hilfe derer die Überlappung bzw. Überdeckung zwischen einem Frontmähwerk und mindestens einem Heckmähwerk komfortabel eingestellt werden können.

Hiervon ausgehend liegt der vorliegenden Erfindung die Aufgabe zugrunde, eine neuartige Mensch-Maschine-Schnittstelle eines landwirtschaftlichen Arbeitsgeräts, ein neuartiges landwirtschaftlichen Arbeitsgerät und ein neuartiges Verfahren zum Betreiben des landwirtschaftlichen Arbeitsgeräts zu schaffen.

Diese Aufgabe wird durch eine Mensch-Maschine-Schnittstelle nach Anspruch 1 gelöst.

Dann, wenn für das jeweilige Heckmähwerk der erste Grenzwert und damit die maximal zulässigen Überdeckung eingestellt ist, ist bei tippartiger Betätigung der jeweiligen Eingabetaste das für das jeweilige Heckmähwerk der zweite Grenzwert und damit die minimal zulässige Überdeckung automatsch einstellbar.

Dann, wenn für das jeweilige Heckmähwerk der zweite Grenzwert und damit die minimal zulässigen Überdeckung eingestellt ist, ist bei tippartiger Betätigung der jeweiligen Eingabetaste das für das jeweilige Heckmähwerk der erste Grenzwert und damit die maximal zulässige Überdeckung automatsch einstellbar.

Dann, wenn für das jeweilige Heckmähwerk der erste Grenzwert oder der zweite Grenzwert eingestellt ist, ist bei dauerhafter Betätigung der jeweiligen Eingabetaste für das jeweilige Heckmähwerk eine von der Länge der dauerhaften Betätigung abhängige Überdeckung zwischen dem ersten Grenzwert und den zweiten Grenzwert automatsch einstellbar.

Dann, wenn für das jeweilige Heckmähwerk eine Überdeckung zwischen dem ersten Grenzwert und dem zweiten Grenzwert eingestellt ist, ist bei tippartiger Betätigung der jeweiligen Eingabetaste das für das jeweilige Heckmähwerk der erste Grenzwert und damit die maximal zulässige Überdeckung automatisch einstellbar.

Mit Hilfe der erfindungsgemäßen Mensch-Maschine-Schnittstelle kann eine Überdeckung zwischen dem Frontmähwerk und dem oder jedem Heckmähwerk besonders vorteilhaft automatisch eingestellt werden. Die Mensch-Maschine-Schnittstelle hält für das jeweilige Heckmähwerke eine Eingabetaste bereit, die in einem ersten Eingabemodus tippartig und in einem zweiten Eingabemodus dauerhaft betätigt werden kann.

Bei tippartiger Betätigung der jeweiligen Eingabetaste wird abhängig vom Ausgangszustand des jeweiligen Heckmähwerks automatisch die minimal zulässige Überdeckung oder die maximal zulässige Überdeckung am jeweiligen Heckmähwerk eingestellt. Bei dauerhafter Betätigung der jeweiligen Eingabetaste ist eine Überdeckung am jeweiligen Heckmähwerk einstellbar, die zwischen der minimal zulässigen Überdeckung und der maximal zulässigen Überdeckung liegt. Dies erlaubt letztendlich eine vorteilhafte, effektive und zuverlässige Einstellung der Überdeckung an einem Frontmähwerk und mindestens einem Heckmähwerk eines landwirtschaftlichen Arbeitsgeräts.

Nach der Erfindung weist die Mensch-Maschine-Schnittstelle für ein linkes Heckmähwerk und für ein rechtes Heckmähwerk jeweils eine individuelle Eingabetaste auf, über welche die Überdeckung des jeweiligen Heckmähwerks auf diese Art und Weise automatisch heckmähwerkindividuell einstellbar ist. Hiermit können die Überdeckungen für die Heckmähwerke individuell, einfach, zuverlässig und effektiv eingestellt werden.

Nach einer weiteren vorteilhaften Weiterbildung der Erfindung weist die Mensch-Maschine-Schnittstelle für das linke Heckmähwerk und das rechtes Heckmähwerk weiterhin eine gemeinsame Eingabetaste auf, über welche die Überdeckung für beide Heckmähwerke gemeinsam auf diese Art und Weise automatisch dann einstellbar ist, wenn im Ausgangszustand die Überdeckungen der Heckmähwerke symmetrisch eingestellt sind. Dann hingegen, wenn im Ausgangszustand die Überdeckungen beiden Heckmähwerke asymmetrisch eingestellt sind, ist über die gemeinsame Eingabetaste die Überdeckung für beide Heckmähwerke gemeinsam vorzugsweise im Sinne eine Überdeckungsspiegelung automatisch einstellbar. Hiermit können die Überdeckungen an den Heckmähwerken gemeinsam einfach, effektiv und zuverlässig eingestellt werden.

Das erfindungsgemäße Verfahren zum Betreiben des landwirtschaftlichen Arbeitsgeräts ist in Anspruch [4] definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Dabei zeigt:
- Fig. 1: ein landwirtschaftliches Arbeitsgerät; und
- Fig. 2: eine Mensch-Maschine-Schnittstelle des landwirtschaftlichen Arbeitsgeräts.

Die hier vorliegende Erfindung betrifft eine Mensch-Maschine-Schnittstelle für ein zu steuerndes oder zu regelndes, landwirtschaftliches Arbeitsgerät, wobei das Arbeitsgerät ein Zugfahrzeug, ein an das Zugfahrzeug gekoppeltes Frontmähwerk und ein an das Zugfahrzeug gekoppeltes Heckmähwerk umfasst.

Weiterhin betrifft die Erfindung ein Verfahren zum Betreiben eines solchen landwirtschaftlichen Arbeitsgeräts.

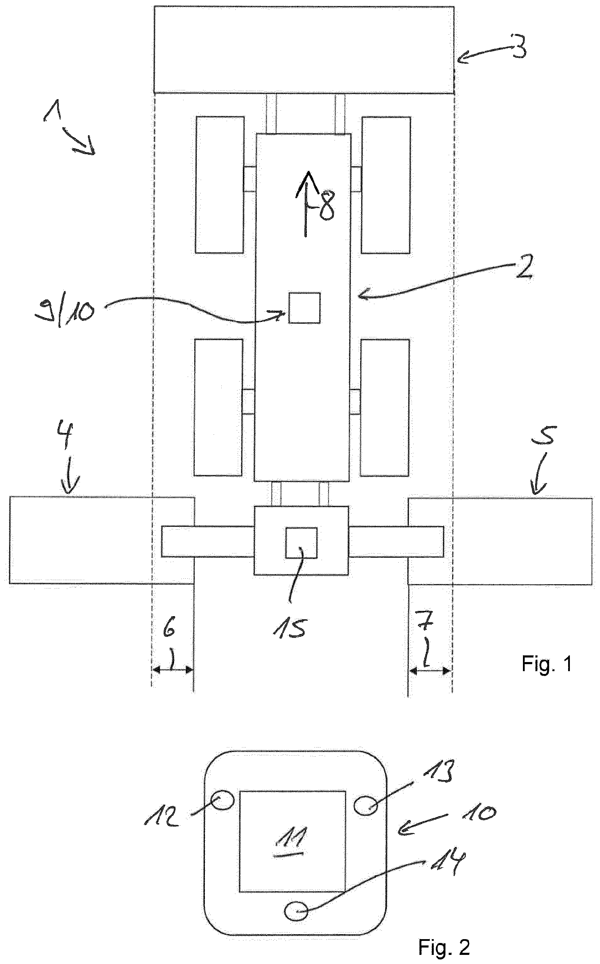

Fig. 1 zeigt schematisiert ein landwirtschaftliches Arbeitsgerät 1, wobei das landwirtschaftliche Arbeitsgerät 1 ein Zugfahrzeug 2, ein an das Zugfahrzeug 2 gekoppeltes Frontmähwerk 3 sowie zwei an das Zugfahrzeug 2 gekoppelte Heckmähwerke 4 und 5 umfasst. Es kann auch nur ein einziges Heckmähwerk vorhanden sein.

Ein Mähwerk im Sinne der vorliegenden Erfindung kann auch aus mehreren Arbeits- bzw. Mäheinheiten bestehen, wodurch beispielsweise die maximale Arbeitsbreite vergrößert und/oder eine bessere Bodenanpassung realisiert werden kann.

Im Ausführungsbeispiel der Fig. 1 ist für jedes der Heckmähwerke 4 und 5 eine aktuell eingestellte Überlappung bzw. Überdeckung 6 bzw. 7 zum Frontmähwerk 3 gezeigt, wobei diese Überdeckung 6, 7 zwischen einer maximal zulässigen Überdeckung und einer minimal zulässigen Überdeckung eingestellt werden kann.

Dann, wenn an beiden Heckmähwerken 4, 5 relativ zum Frontmähwerk 3 eine maximal zulässige Überdeckung eingestellt ist, sind die beiden Heckmähwerke 4, 5, bezogen auf die Fahrtrichtung 8 des Arbeitsgeräts 1 nach maximal innen verlagert, wohingegen im Falle einer minimal zulässigen Überdeckung die Heckmähwerke 4, 5 bezogen auf die Fahrtrichtung 8 nach maximal außen verlagert sind.

Fig. 1 zeigt weiterhin schematisiert ein Steuerungssystem 9 des Arbeitsgeräts 1, welches eine Mensch-Maschine-Schnittstelle 10 umfasst, wobei die Mensch-Maschine-Schnittstelle 10 des Steuerungssystems 9 in Fig. 2 im größeren Detail gezeigt ist.

So umfasst die Mensch-Maschine-Schnittstelle 10 einen Bildschirm 11 sowie Eingabetasten 12, 13 und 14. Über die Eingabetasten 12, 13 und 14 der Mensch-Maschine-Schnittstelle 10 des Steuerungssystems 9 kann für die Heckmähwerke 4, 5 die Überlappung bzw. Überdeckung 6 bzw. 7 eingestellt werden, nämlich zwischen einem einer maximal zulässigen Überdeckung entsprechenden ersten Grenzwert und einem einer minimal zulässigen Überdeckung entsprechenden zweiten Grenzwert, wobei diese Grenzwerte im Steuerungssystem 9 gespeichert sind und/oder über die Mensch-Maschine-Schnittstelle 10 des Steuerungssystems 9 bedienerseitig eingegeben werden können.

Die Mensch-Maschine-Schnittstelle 10 der Arbeitsgeräts 1 verfügt für jedes Heckmähwerk 4, 5 über jeweils eine heckmähwerksindividuelle Eingabetaste 12, 13 zum heckmähwerksindividuellen Einstellen der Überlappung bzw. Überdeckung 6 bzw. 7.

Dann, wenn für das jeweilige Heckmähwerk 4, 5 der erste Grenzwert und damit die maximal zulässige Überdeckung aktuell eingestellt ist, ist bei tippartiger Betätigung der jeweiligen Eingabetaste 12 bzw. 13 für das jeweilige Heckmähwerk 12, 13 der zweite Grenzwert und damit die minimal zulässige Überdeckung automatisch bzw. automatisiert einstellbar.

Ist demnach zum Beispiel für das linke Heckmähwerk 4 die maximal zulässige Überdeckung eingestellt und wird die Eingabetaste 12 der Mensch-Maschine-Schnittstelle 10 für dieses linke Heckmähwerk 4 tippartig betätigt, so wird für das linke Heckmähwerk 4 automatisch die minimal zulässige Überdeckung eingestellt.

Ist am rechten Heckmähwerk 5 die maximal zulässige Überdeckung eingestellt und wird die Eingabetaste 13 für dieses rechte Heckmähwerk 5 tippartig betätigt, so wird dann am rechten Heckmähwerk 5 automatisch die minimal zulässige Überdeckung eingestellt.

Dann, wenn für das jeweilige Heckmähwerk 4 bzw. 5 der zweite Grenzwert und damit die minimal zulässige Überdeckung aktuell eingestellt ist, ist bei tippartiger Betätigung der jeweiligen Eingabetaste 12, 13 für das jeweilige Heckmähwerk 4 bzw. 5 der erste Grenzwert und damit die maximal zulässige Überdeckung automatisch bzw. automatisiert einstellbar.

Ist also am linken Heckmähwerk 4 die minimal zulässige Überdeckung aktuell eingestellt und wird die entsprechende Eingabetaste 12 für dieses linke Heckmähwerk 4 tippartig betätigt, so wird am linken Heckmähwerk 4 automatisch die maximal zulässige Überdeckung eingestellt. Nimmt das rechte Heckmähwerk 5 aktuell die minimal zulässige Überdeckung ein und wird die Eingabetaste 13 für das rechte Heckmähwerk 5 tippartig betätigt, so wird am rechten Heckmähwerk 5 automatisch die maximal zulässige Überdeckung eingestellt.

Dann, wenn für das jeweilige Heckmähwerk 4, 5 der erste Grenzwert oder der zweite Grenzwert und damit die maximal zulässige Überdeckung oder die minimal zulässige Überdeckung eingestellt ist, ist bei dauerhafter Betätigung der jeweiligen Eingabetaste 12 bzw. 13 für das Heckmähwerk 4 bzw. 5 eine von der Länge der dauerhaften Betätigung abhängige Überdeckung zwischen dem ersten Grenzwert und dem zweiten Grenzwert und damit zwischen der maximal zulässigen Überdeckung und der minimal zulässigen Überdeckung einstellbar.

Ist also zum Beispiel für das linke Heckmähwerk 4 des Arbeitsgeräts aktuell die maximal zulässige Überdeckung eingestellt und wird die entsprechende Eingabetaste 12 des linken Heckmähwerks 4 dauerhaft betätigt, so kann das linke Heckmähwerk 4 automatisch eine Überdeckung einnehmen, die zwischen der minimalen Überdeckung und der maximalen Überdeckung liegt, wobei die eingestellte Überdeckung von der Dauer der Betätigung der entsprechenden Eingabetaste 12 abhängig ist.

Auf analoge Art und Weise kann auch für das rechte Heckmähwerk 5 des Arbeitsgeräts 1 über die entsprechende Eingabetaste 13 eine Überdeckung zwischen der minimal zulässigen Überdeckung und der maximal zulässigen Überdeckung, also zwischen dem ersten Grenzwert und dem zweiten Grenzwert, eingestellt werden.

Dann, wenn für das jeweilige Heckmähwerk 4 bzw. 5 des Arbeitsgeräts eine Überdeckung zwischen dem ersten Grenzwert, also der maximal zulässigen Überdeckung und dem zweiten Grenzwert, also der minimal zulässigen Überdeckung, eingestellt ist, ist bei tippartiger Betätigung der jeweiligen Eingabetaste 12, 13 für das jeweilige Heckmähwerk 4, 5 an dem jeweiligen Heckmähwerk 4, 5 die Überdeckung automatisch auf den ersten Grenzwert und damit auf die maximal zulässige Überdeckung einstellbar.

Ist demnach zum Beispiel das linke Heckmähwerk 4 eine Überdeckung zwischen der maximal zulässigen Überdeckung und der minimal zulässigen Überdeckung ein, und wird die jeweilige Eingabetaste 12 tippartig betätigt, so wird an diesem Heckmähwerk 4 dann automatisch die maximal zulässige Überdeckung eingestellt. Gleiches gilt für das rechte Heckmähwerk 5 bei entsprechender Ausgangseinstellung der Überdeckung und Betätigung der entsprechenden Eingabetaste 13.

Dann, wenn für das jeweilige Heckmähwerk 4 bzw. 5 des Arbeitsgeräts eine Überdeckung zwischen dem ersten Grenzwert, also der maximal zulässigen Überdeckung und dem zweiten Grenzwert, also der minimal zulässigen Überdeckung, eingestellt ist, ist bei dauerhafter Betätigung der jeweiligen Eingabetaste 12, 13 eine von der Länge der dauerhaften Betätigung abhängige Überdeckung zwischen dem ersten Grenzwert und dem zweiten Grenzwert und damit zwischen der maximal zulässigen Überdeckung und der minimal zulässigen Überdeckung einstellbar, und zwar vorzugsweise zunächst in Richtung auf den ersten Grenzwert und damit auf die maximal zulässige Überdeckung.

Daraus folgt, dass die Mensch-Maschine-Schnittstelle 10 des Steuerungssystems 9 des Arbeitsgeräts 1 für die Heckmähwerke 4 und 5 jeweils individuelle Eingabetasten 12, 13 aufweist, über welche die Überdeckung der Heckmähwerke 4, 5 heckmähwerkindividuell auf die obige Art und Weise automatisch einstellbar ist, nämlich über die tippartige Betätigung und die dauerhafte Betätigung der jeweiligen Eingabetaste 12 bzw. 13 auf einen Überdeckungswert, der der maximal zulässigen Überdeckung, der minimal zulässigen Überdeckung oder einer Überdeckung zwischen diesen Grenzwerten entspricht.

Die Mensch-Maschine-Schnittstelle 10 verfügt weiterhin über eine weitere Eingabetaste 14, die eine für beide Heckmähwerke 4, 5 gemeinsame Eingabetaste darstellt. Dann, wenn im Ausgangszustand die Überdeckung beider Heckmähwerke 4 und 5 symmetrisch eingestellt ist, wenn also die Überdeckung 6 des Heckmähwerks 4 der Überdeckung 7 des Heckmähwerks 5 entspricht, dient die gemeinsame Eingabetaste 14 der gemeinsamen automatischen Einstellung der Überdeckung für beide Heckmähwerke 4, 5 auf die oben beschriebene Art und Weise, nämlich über eine tippartige Betätigung sowie dauerhafte Betätigung der gemeinsamen Eingabetaste 14, wobei dann die symmetrische Einstellung der Überdeckung für die beiden Heckmähwerke 4, 5 beibehalten wird.

Dann, wenn zum Beispiel für eine Kurvenfahrt oder für einen Mähbetrieb an einem Hang die Überdeckung an den beiden Heckmähwerken 4 und 5 asymmetrisch eingestellt ist, dient die gemeinsame Eingabetaste 14 der automatischen Einstellung der Überdeckung für beide Heckmähwerke im Sinne einer Überdeckungsspiegelung.

Fährt das landwirtschaftliche Arbeitsgerät 1 zum Beispiel an einem Hang, so ist in einer definierten Fahrtrichtung gesehen für das obere Heckmähwerk eine andere Überdeckung eingestellt als am unteren Heckmähwerk. Dadurch wird die Überdeckung der Heckmähwerke gegenüber dem Frontmähwerk entsprechend der Hangabdrift angepasst, so dass das Feld über die gesamte Arbeitsbreite bearbeitet wird, ohne dass ein ungemähter Streifen stehen bleibt. Wird am Vorgewende, d.h. am Feld-Ende das Arbeitsgerät für eine Fahrt in entgegengesetzte Richtung gewendet, so ist nachfolgend das zuvor untere Heckmähwerk das obere Heckmähwerk und das zuvor obere Heckmähwerk das untere Heckmähwerk. Dann kann durch Betätigen der für beide Heckmähwerke 4, 5 gemeinsamen Eingabetaste 14 die zuvor asymmetrische Überdeckungseinstellung für die Heckmähwerke 4, 5 gespiegelt werden, nämlich derart, dass dann automatisch für das nunmehr obere Heckmähwerk die Überdeckung des zuvor unteren Heckmähwerks und für das nunmehr untere Heckmähwerk die Überdeckung des zuvor oberen Heckmähwerks automatisch eingestellt wird. Auf analoge Art und Weise kann auch bei einer Kurvenfahrt mit wechselnder Kurvenrichtung, z.B. bei einer S-Kurvenfahrt, die asymmetrische Überdeckungseinstellung des kurveninneren und kurvenäußeren Heckmähwerks gespiegelt werden nämlich durch Betätigung der für beide Heckmähwerke 4, 5 gemeinsame Eingabetaste 14.

Die Art und Weise, auf welche über die gemeinsame Eingabetaste 14 die Überdeckung für die beiden Heckmähwerke 4, 5 verändert werden kann, hängt von dem Ausgangszustand der Überdeckungseinstellung an den Heckmähwerken 4, 5 ab. Ist im Ausgangszustand die Überdeckung der Heckmähwerke 4, 5 symmetrisch eingestellt, ermöglicht die für beide Heckmähwerke 4, 5 gemeinsame Eingabetaste 14 eine Veränderung der Überdeckung analog zu den Einstellmöglichkeiten der heckmähwerkindividuellen Eingabetasten 12 und 13, jedoch für beide Heckmähwerke 4, 5 gemeinsam. Dann, wenn im Ausgangszustand die Überdeckung der Heckmähwerke 4, 5 asymmetrisch eingestellt ist, dient die für beide Heckmähwerke 4, 5 gemeinsame Eingabetaste 14 einer Überdeckungsspiegelung.

Bei den Eingabetasten 12, 13 und 14 handelt es sich vorzugsweise um Auxiliary-Eingabetasten eines ISO- Datenbus -Bedienterminals.

Nach einer Alternative der Erfindung kann vorgesehen sein, dass das Arbeitsgerät einen Neigungssensor 15 umfasst, wobei dann über die Auswertung des Signals des Neigungssensors 15 die Überdeckungsspiegelung automatisch vorgenommen wird, also ohne Betätigung der für beide Heckmähwerke 4, 5 gemeinsamen Eingabetaste 14.

Die Mensch-Maschine-Schnittstelle 10 ist Bestandteil des Steuerungssystems 9 des Arbeitsgeräts, wobei die Mensch-Maschine-Schnittstelle 10 vorzugsweise im Zugfahrzeug 2 integriert ist.

Im Sinne dieser Anmeldung zählen auch Mulchgeräte, die ein Mähgut abmähen und gleichzeitig zerkleinern, zu den Mähwerken und können erfindungsgemäß bedient werden. Entsprechende Geräte können beispielsweise als Sichel- oder Schlegelmulchgeräte ausgeführt sein, die wie die vorstehend beschriebenen Mähwerke im Front-, Zwischenachs- und/oder Heckbereich an Traktoren angebaut werden können.

### Bezugszeichenliste

- 1: Arbeitsgerät
- 2: Zugfahrzeug
- 3: Frontmähwerk
- 4: Heckmähwerk
- 5: Heckmähwerk
- 6: Überdeckung
- 7: Überdeckung
- 8: Fahrtrichtung
- 9: Steuerungssystem
- 10: Mensch-Maschine-Schnittstelle
- 11: Bildschirm
- 12: Eingabetaste
- 13: Eingabetaste
- 14: Eingabetaste
- 15: Neigungssensor

## Patentansprüche

1. Landwirtschaftliches Arbeitsgerät (1) umfassend ein Zugfahrzeug (2), ein an das Zugfahrzeug (2) gekoppeltes Frontmähwerk (3) und mindestens ein an das Zugfahrzeug (1) gekoppeltes Heckmähwerk (4, 5) mit einer Mensch-Maschine-Schnittstelle (10), die Eingabetasten (12, 13, 14) aufweist, und wobei über mindestens eine der Eingabetasten für das oder jedes Heckmähwerk (4, 5) eine Überlappung oder Überdeckung (6, 7) mit dem Frontmähwerk (3) zwischen einem einer maximal zulässigen Überdeckung entsprechenden ersten Grenzwert und einem einer minimal zulässigen Überdeckung entsprechenden zweiten Grenzwert einstellbar ist, **dadurch gekennzeichnet, dass** die Mensch-Maschine-Schnittstelle (10) dazu eingerichtet ist
dann, wenn für das jeweilige Heckmähwerk (4, 5) der erste Grenzwert und damit die maximal zulässigen Überdeckung eingestellt ist, bei tippartiger Betätigung der jeweiligen Eingabetaste (12, 13, 14) für das jeweilige Heckmähwerk (4, 5) der zweite Grenzwert und damit die minimal zulässige Überdeckung automatisch einstellbar ist,
dann, wenn für das jeweilige Heckmähwerk (4, 5) der zweite Grenzwert und damit die minimal zulässigen Überdeckung eingestellt ist, bei tippartiger Betätigung der jeweiligen Eingabetaste (12, 13, 14) für das jeweilige Heckmähwerk (4, 5) der erste Grenzwert und damit die maximal zulässige Überdeckung automatisch einstellbar ist,
dann, wenn für das jeweilige Heckmähwerk (4, 5) der erste Grenzwert oder der zweite Grenzwert eingestellt ist, bei dauerhafter Betätigung der jeweiligen Eingabetaste (12, 13, 14) für das jeweilige Heckmähwerk (4, 5) eine von der Länge der dauerhaften Betätigung abhängige Überdeckung zwischen dem ersten Grenzwert und den zweiten Grenzwert einstellbar ist,
dann, wenn für das jeweilige Heckmähwerk (4, 5) eine Überdeckung zwischen dem ersten Grenzwert und dem zweiten Grenzwert eingestellt ist, bei tippartiger Betätigung der jeweiligen Eingabetaste (12, 13, 14) für das jeweilige Heckmähwerk (4, 5) der erste Grenzwert und damit die maximal zulässige Überdeckung automatisch einstellbar ist,
wobei die Mensch-Maschine-Schnittstelle (10) für ein linkes und/oder ein rechtes Heckmähwerk (4, 5) eine individuelle Eingabetaste (12, 13) aufweist, über welche die Überdeckung auf diese Art und Weise heckmähwerkindividuell einstellbar ist.

2. Landwirtschaftliches Arbeitsgerät (1) nach Anspruch 1, **dadurch gekennzeichnet, dass** die Mensch-Maschine-Schnittstelle (10) für ein linkes Heckmähwerk (4) und ein rechtes Heckmähwerk (5) eine gemeinsame Eingabetaste (14) aufweist, über welche die Überdeckung für beide Heckmähwerke (4, 5) gemeinsam auf diese Art und Weise dann einstellbar ist, wenn im Ausgangszustand die Überdeckung derselben symmetrisch eingestellt ist.

3. Landwirtschaftliches Arbeitsgerät (1) nach einem der Ansprüche 1 bis 2, **dadurch gekennzeichnet, dass** die Mensch-Maschine-Schnittstelle (10) für ein linkes Heckmähwerk (4) und ein rechtes Heckmähwerk (5) eine gemeinsame Eingabetaste (14) aufweist, über welche die Überdeckung für beide Heckmähwerke (4, 5) gemeinsam im Sinne eine Überdeckungsspiegelung dann einstellbar ist, wenn im Ausgangszustand die Überdeckung derselben asymmetrisch eingestellt ist.

4. Verfahren zum Betreiben eines landwirtschaftlichen Arbeitsgeräts (1), wobei das Arbeitsgerät (1) ein Zugfahrzeug (2), ein an das Zugfahrzeug (2) gekoppeltes Frontmähwerk (3) und mindestens ein an das Zugfahrzeug (2) gekoppeltes Heckmähwerk (4, 5) umfasst, nämlich zum Einstellen eine Überlappung oder Überdeckung (6, 7) des jeweiligen Heckmähwerks (4, 5) mit dem Frontmähwerk (3) zwischen einem einer maximal zulässigen Überdeckung entsprechenden ersten Grenzwert und einem einer minimal zulässigen Überdeckung entsprechenden zweiten Grenzwert über mindestens eine Eingabetaste (12, 13, 14) einer Mensch-Maschine-Schnittstelle (10) des Arbeitsgeräts (1), **dadurch gekennzeichnet, dass**
dann, wenn für das jeweilige Heckmähwerk (4, 5) der erste Grenzwert und damit die maximal zulässigen Überdeckung eingestellt ist, bei tippartiger Betätigung der jeweiligen Eingabetaste (12, 13, 14) für das jeweilige Heckmähwerk (4, 5) der zweite Grenzwert und damit die minimal zulässige Überdeckung automatsch eingestellt wird,
dann, wenn für das jeweilige Heckmähwerk (4, 5) der zweite Grenzwert und damit die minimal zulässigen Überdeckung eingestellt ist, bei tippartiger Betätigung der jeweiligen Eingabetaste (12, 13, 14) für das jeweilige Heckmähwerk (4, 5) der erste Grenzwert und damit die maximal zulässige Überdeckung automatsch eingestellt wird,
dann, wenn für das jeweilige Heckmähwerk (4, 5) der erste Grenzwert oder der zweite Grenzwert eingestellt ist, bei dauerhafter Betätigung der jeweiligen Eingabetaste (12, 13, 14) für das jeweilige Heckmähwerk (4, 5) eine von der Länge der dauerhaften Betätigung abhängige Überdeckung zwischen dem ersten Grenzwert und den zweiten Grenzwert eingestellt wird,
dann, wenn für das jeweilige Heckmähwerk (4, 5) eine Überdeckung zwischen dem ersten Grenzwert und dem zweiten Grenzwert eingestellt ist, bei tippartiger Betätigung der jeweiligen Eingabetaste (12, 13, 14) für das jeweilige Heckmähwerk (4, 5) der erste Grenzwert und damit die maximal zulässige Überdeckung automatisch eingestellt wird,
wobei die Mensch-Maschine-Schnittstelle (10) für ein linkes und/oder ein rechtes Heckmähwerk (4, 5) eine individuelle Eingabetaste (12, 13) aufweist, über welche die Überdeckung auf diese Art und Weise heckmähwerkindividuell einstellbar ist.

## Claims

1. Agricultural working device (1) comprising a towing vehicle (2), a front mowing mechanism (3) coupled to the towing vehicle (2) and at least one rear mowing mechanism (4, 5) coupled to the towing vehicle (1), having a man-machine interface (10) which has input keys (12, 13, 14), and wherein, by way of at least one of the input keys, it is possible to set an overlap or superimposition (6, 7) for the or each rear mowing mechanism (4, 5) with the front mowing mechanism (3) between a first limit value corresponding to a maximum permissible overlap and a second limit value corresponding to a minimum permissible overlap, **characterized in that** the man-machine interface (10) is designed such that
when the first limit value and thus the maximum permissible overlap has been set for the respective rear mowing mechanism (4, 5), upon tap-like actuation of the respective input key (12, 13, 14), the second limit value and thus the minimum permissible overlap is automatically settable for the respective rear mowing mechanism (4, 5),
when the second limit value and thus the minimum permissible overlap has been set for the respective rear mowing mechanism (4, 5), upon tap-like actuation of the respective input key (12, 13, 14), the first limit value and thus the maximum permissible overlap is automatically settable for the respective rear mowing mechanism (4, 5),
when the first limit value or the second limit value has been set for the respective rear mowing mechanism (4, 5), upon continuous actuation of the respective input key (12, 13, 14), an overlap, dependent on the length of the continuous actuation, between the first limit value and the second limit value is settable for the respective rear mowing mechanism (4, 5),
when an overlap between the first limit value and the second limit value has been set for the respective rear mowing mechanism (4, 5), upon tap-like actuation of the respective input key (12, 13, 14), the first limit value and thus the maximum permissible overlap is automatically settable for the respective rear mowing mechanism (4, 5),
wherein the man-machine interface (10) has an individual input key (12, 13) for a left-hand and/or a right-hand rear mowing mechanism (4, 5), by way of which the overlap is settable for each individual rear mowing mechanism in this way.

2. Agricultural working device (1) according to Claim 1, **characterized in that** the man-machine interface (10) has a common input key (14) for a left-hand rear mowing mechanism (4) and a right-hand rear mowing mechanism (5), by way of which the overlap is settable jointly for both rear mowing mechanisms (4, 5) in this way when the overlap thereof has been set symmetrically in the initial state.

3. Agricultural working device (1) according to either of Claims 1 and 2, **characterized in that** the man-machine interface (10) has a common input key (14) for a left-hand rear mowing mechanism (4) and a right-hand rear mowing mechanism (5), by way of which the overlap is settable jointly for both rear mowing mechanisms (4, 5) as an overlap mirror-image when the overlap thereof has been set asymmetrically in the initial state.

4. Method for operating an agricultural working device (1), wherein the working device (1) comprises a towing vehicle (2), a front mowing mechanism (3) coupled to the towing vehicle (2) and at least one rear mowing mechanism (4, 5) coupled to the towing vehicle (2), specifically for setting an overlap or superimposition (6, 7) of the respective rear mowing mechanism (4, 5) with the front mowing mechanism (3) between a first limit value corresponding to a maximum permissible overlap and a second limit value corresponding to a minimum permissible overlap by way of at least one input key (12, 13, 14) of a man-machine interface (10) of the working device (1), **characterized in that**
when the first limit value and thus the maximum permissible overlap has been set for the respective rear mowing mechanism (4, 5), upon tap-like actuation of the respective input key (12, 13, 14), the second limit value and thus the minimum permissible overlap is automatically set for the respective rear mowing mechanism (4, 5),
when the second limit value and thus the minimum permissible overlap has been set for the respective rear mowing mechanism (4, 5), upon tap-like actuation of the respective input key (12, 13, 14), the first limit value and thus the maximum permissible overlap is automatically set for the respective rear mowing mechanism (4, 5),
when the first limit value or the second limit value has been set for the respective rear mowing mechanism (4, 5), upon continuous actuation of the respective input key (12, 13, 14), an overlap, dependent on the length of the continuous actuation, between the first limit value and the second limit value is set for the respective rear mowing mechanism (4, 5),
when an overlap between the first limit value and the second limit value has been set for the respective rear mowing mechanism (4, 5), upon tap-like actuation of the respective input key (12, 13, 14), the first limit value and thus the maximum permissible overlap is automatically set for the respective rear mowing mechanism (4, 5),
wherein the man-machine interface (10) has an individual input key (12, 13) for a left-hand and/or a right-hand rear mowing mechanism (4, 5), by way of which the overlap is settable for each individual rear mowing mechanism in this way.

## Revendications

1. Appareil de travail agricole (1) comprenant un véhicule de traction (2), un mécanisme de coupe frontal (3) couplé au véhicule de traction (2) et au moins un mécanisme de coupe arrière (4, 5) couplé au véhicule de traction (1) avec une interface homme-machine (10) qui comporte des touches d'entrée (12, 13, 14), et au moins une des touches d'entrée pour le ou chaque mécanisme de coupe arrière (4, 5) permettant de régler un chevauchement ou un recouvrement (6, 7) avec le mécanisme de coupe frontal (3) entre une première valeur limite correspondant à un recouvrement maximal admis et une seconde valeur limite correspondant à un recouvrement minimal admis, **caractérisé en ce que** l'interface homme-machine (10) est agencée de façon que,
lorsque la première valeur limite et donc le recouvrement maximal admis sont réglés pour le mécanisme de coupe arrière respectif (4, 5), la seconde valeur limite et donc le recouvrement minimal admis sont réglables automatiquement pour le mécanisme de coupe arrière respectif (4, 5) en actionnant par impulsions la touche d'entrée respective (12, 13, 14),
lorsque la seconde valeur limite et donc le recouvrement minimal admis sont réglés pour le mécanisme de coupe arrière respectif (4, 5), la première valeur limite et donc le recouvrement maximal admis sont réglables automatiquement pour le mécanisme de coupe arrière respectif (4, 5) en actionnant par impulsions la touche d'entrée respective (12, 13, 14),
lorsque la première valeur limite ou la seconde valeur limite est réglée pour le mécanisme de coupe arrière respectif (4, 5), il est possible de régler, pour le mécanisme de coupe arrière respectif (4, 5), par un actionnement continu de la touche d'entrée respective (12, 13, 14), un recouvrement, dépendant de la longueur de l'actionnement continu, entre la première valeur limite et la seconde valeur limite,
lorsqu'un recouvrement est réglé entre la première valeur limite et la seconde valeur limite pour le mécanisme de coupe arrière respectif (4, 5), la première valeur limite et donc le recouvrement maximal admis sont réglables automatiquement pour le mécanisme de coupe arrière respectif (4, 5) en actionnant par impulsions la touche d'entrée respective (12, 13, 14), l'interface homme-machine (10) comportant pour un mécanisme de coupe arrière gauche et/ou droit (4, 5) une touche d'entrée individuelle (12, 13) par l'intermédiaire de laquelle le recouvrement peut être réglé individuellement pour le mécanisme de coupe arrière.

2. Appareil de travail agricole (1) selon la revendication 1, **caractérisé en ce que** l'interface homme-machine (10) comporte pour un mécanisme de coupe arrière gauche (4) et pour un mécanisme de coupe arrière droit (5) une touche d'entrée conjointe (14) par l'intermédiaire de laquelle le recouvrement peut être réglé conjointement pour les deux mécanismes de coupe arrière (4, 5) si, à l'état initial, le recouvrement de ceux-ci est réglé de manière symétrique.

3. Appareil de travail agricole (1) selon une des revendications 1 à 2, **caractérisé en ce que** l'interface homme-machine (10) comporte pour un mécanisme de coupe arrière gauche (4) et pour un mécanisme de coupe arrière droit (5) une touche d'entrée conjointe (14) par l'intermédiaire de laquelle le recouvrement peut être réglé conjointement pour les deux mécanismes de coupe arrière (4, 5) au profit d'un recouvrement en miroir si, à l'état initial, le recouvrement de ceux-ci est réglé de manière asymétrique.

4. Procédé de fonctionnement d'un appareil de travail agricole (1), l'appareil de travail (1) comprenant un véhicule de traction (2), un mécanisme de coupe frontal (3) couplé au véhicule de traction (2) et au moins un mécanisme de coupe arrière (4, 5) couplé au véhicule de traction (2), à savoir pour régler un chevauchement ou un recouvrement (6, 7) du mécanisme de coupe arrière respectif (4, 5) avec le mécanisme de coupe frontal (3) entre une première valeur limite correspondant à un recouvrement maximal admis et une seconde valeur limite correspondant à un recouvrement minimal admis par l'intermédiaire d'au moins une touche d'entrée (12, 13, 14) d'une interface homme-machine (10) de l'appareil de travail (1), **caractérisé en ce que**
lorsque la première valeur limite et donc le recouvrement maximal admis sont réglés pour le mécanisme de coupe arrière respectif (4, 5), la seconde valeur limite et donc le recouvrement minimal admis sont réglés automatiquement pour le mécanisme de coupe arrière respectif (4, 5) en actionnant par impulsions la touche d'entrée respective (12, 13, 14),
lorsque la seconde valeur limite et donc le recouvrement minimal admis sont réglés pour le mécanisme de coupe arrière respectif (4, 5), la première valeur limite et donc le recouvrement maximal admis sont réglés automatiquement pour le mécanisme de coupe arrière respectif (4, 5) en actionnant par impulsions la touche d'entrée respective (12, 13, 14),
lorsque la première valeur limite ou la seconde valeur limite est réglée pour le mécanisme de coupe arrière respectif (4, 5), on règle, pour le mécanisme de coupe arrière respectif (4, 5), par un actionnement continu de la touche d'entrée respective (12, 13, 14), un recouvrement, dépendant de la longueur de l'actionnement continu, entre la première valeur limite et la seconde valeur limite,
lorsqu'un recouvrement est réglé entre la première valeur limite et la seconde valeur limite pour le mécanisme de coupe arrière respectif (4, 5), la première valeur limite et donc le recouvrement maximal admis sont réglés automatiquement pour le mécanisme de coupe arrière respectif (4, 5) en actionnant par impulsions la touche d'entrée respective (12, 13, 14), l'interface homme-machine (10) comportant pour un mécanisme de coupe arrière gauche et/ou droit (4, 5) une touche d'entrée individuelle (12, 13) par l'intermédiaire de laquelle le recouvrement peut être réglé individuellement pour le mécanisme de coupe arrière.
